# EUROPÄISCHE PATENTSCHRIFT

(11) **EP 3 642 934 B1**
(45) Veröffentlichungstag und Bekanntmachung des Hinweises auf die Patenterteilung: **06.05.2026**
(21) Anmeldenummer: 18737799.9
(22) Anmeldetag: 20.06.2018
(51) Int. Cl.: H02K 1/12, H02K 15/064

(54) **VORRICHTUNG UND VERFAHREN ZUM FÜGEN ELEKTRISCHER LEITER IN EIN MASCHINENELEMENT EINER ELEKTRISCHEN MASCHINE**
DEVICE AND METHOD FOR JOINING ELECTRICAL CONDUCTORS IN A MACHINE ELEMENT OF AN ELECTRIC MACHINE
DISPOSITIF ET PROCÉDÉ POUR ASSEMBLER DES CONDUCTEURS ÉLECTRIQUES DANS UN ÉLÉMENT DE MACHINE D'UNE MACHINE ÉLECTRIQUE

(30) Priorität: 20.06.2017 DE 102017113617
(43) Veröffentlichungstag der Anmeldung: 29.04.2020
(73) Patentinhaber: Grob-Werke GmbH & Co. KG, 87719 Mindelheim (DE)
(72) Erfinder: DREHER, Clemens, 87719 Mindelheim (DE); METZGER, Manfred, 86871 Rammingen (DE)
(74) Vertreter: KASTEL Patentanwälte PartG mbB
(86) Internationale Anmeldenummer: PCT/DE2018/100576
(87) Internationale Veröffentlichungsnummer: WO 2018/233771

(56) Entgegenhaltungen:
- GB-A- 2 290 040
- GB-A- 644 761

## Beschreibung

Die Erfindung betrifft eine Vorrichtung und ein Verfahren zum Fügen elektrischer Leiter in ein Maschinenelement einer elektrischen Maschine

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen. Maschinenelemente derartiger elektrischer Maschinen sind beispielsweise Statoren oder Rotoren. Diese weisen elektrisch leitende Wicklungen bzw. Windungen auf, die eine Spulenwicklung zur Erzeugung eines Magnetfelds bilden.

Zum Beispiel bestehen Elektromotoren aus einem rotierenden Rotor und einem unbewegten Stator. Sowohl der Rotor als auch der Stator weisen eine Vielzahl von zueinander isolierten elektrischen Leitungen auf, welche die Wicklungen bzw. Windungen bilden, in denen bei Stromfluss das zur Bewegung des Elektromotors nötige magnetische Feld erzeugt wird. Bei der Herstellung von Statoren für Elektromotoren müssen somit eine Vielzahl von parallel zueinander laufenden Leitungen auf engstem Raum mit hoher geometrischer Genauigkeit zueinander ausgerichtet werden. Somit sind Herstellungsverfahren für Statoren kompliziert und kostenaufwändig. Gleiches gilt für Rotoren von Elektromotoren. Im Folgenden sind die Aussagen für Statoren auch sinngemäß für Rotoren zutreffend.

Eine effiziente Herstellungsweise für Statoren ist die Verwendung von sogenannten Hairpins zur Bildung der Wicklungen. Dabei werden die Wicklungen aus einer Vielzahl von Drahtstücken gebildet, deren Enden miteinander verbunden werden. Derartige Drahtstücke werden oftmals und auch im Folgenden als Pins oder Hairpins bezeichnet. Der Draht, aus dem die Pins bzw. Hairpins geformt werden, kann insbesondere einen rechteckigen Querschnitt haben, als Flach-, Vierkant oder Profildraht ausgestattet sein, oder zum Beispiel als Flachbandstahl oder ähnliches vorliegen.

Fügevorrichtungen mit einem Greifelement zum Greifen und Halten einer Ringanordnung von Hairpins beim Überführen oder Fügen in Maschinenelemente von elektrischen Maschinen sind aus der GB 2 290 040 A, GB 644 761 A und der US 2006/0230607 A1 bekannt.

Zum Beispiel offenbaren die GB 2 290 040 A und die GB 644 761 A Vorrichtungen und Verfahren zum Herstellen eines Maschinenelements einer elektrischen Maschine mittels Einfügens von Hairpins in ein Gehäuse des Maschinenelements. In der GB 644 761 A wird hierzu ein Kranz von Hairpins gebildet und in einen Kern eines Rotors eingefügt. Hierzu ist eine Sammelaufnahme zum manuellen Bilden der Kranzanordnung an einem beweglichen unteren Träger angeordnet, während an einem stationären oberen Träger ein Greifelement mit radial beweglichen Fingern angeordnet ist, die an der Außenseite der Kranzanordnung angreifen und die Drahtstücke der Kranzanordnung zwischen sich reibschlüssig aufnehmen und greifen können. Somit sind aus der GB 644 761 A eine Vorrichtung gemäß dem Oberbegriff des Anspruchs 1 und ein Verfahren gemäß dem Oberbegriff des Nebenanspruchs bekannt.

Beispielsweise dient ein Statorelement mit einer Vielzahl von Nuten zur Aufnahme der Pins oder Hairpins. Diese werden an ihren Enden elektrisch miteinander verbunden, um auf diese Weise ein mit Wicklungen versehenes Maschinenelement in Form eines Stators zu bilden. Die Kontaktierung entsteht zumeist durch Verschweißen der Pins an ihren Enden. Um bei der Herstellung von Statoren oder Rotoren eine Vielzahl von Pins möglichst dicht gepackt zusammenzustecken, sind diese oftmals in ihrem Dachbereich in einer Richtung gebogen, die senkrecht zur Ebene des Pins verläuft.

Die Pins oder Hairpins können verschiedenartig ausgebildet sein. Beispielsweise gibt es U-förmige Hairpins mit zwei parallel zueinander verlaufende Schenkeln und einem Mittelstück, das eine Dachform hat, die auch als Hausdachform bezeichnet wird. Die Pins oder Hairpins können auch bogenförmig sein oder als sogenannte I-Pins ausgebildet sein, das heißt mit einem einzigen geraden Schenkel.

Nachfolgend wird der Begriff "Pin" allgemein für verschiedenartig ausgebildete Drahtstücke oder Hairpins verwendet, die zur Bildung von Statoren, Rotoren und ähnlichen Maschinenelementen geeignet sind.

Um beispielsweise einen Stator unter Verwendung von Pins als elektrische Leiter herzustellen, werden die verschiedenen Pins oftmals so im Stator verbaut, dass sie einen oder mehrere ringförmige Kränze bilden. An ihren Enden bzw. an den Enden ihrer Schenkel werden die einzelnen Pins elektrisch miteinander verbunden und bilden auf diese Weise eine dicht gepackte Spulenwicklung in der Form eines oder mehrerer Kränze. Die Verbindung der Enden der Pins erfolgt üblicherweise durch Schweißen.

Um die Phasen des Stators an eine Leistungselektronik anzuschließen, wird beispielsweise ein Element zur entsprechenden Verschaltung elektrisch an die Kranzanordnung angeschlossen.

Beim Einfügen der Pins in ein Maschinenelement, wie zum Beispiel Stator oder Rotor, werden jedoch die Pins in vielen Fällen beschädigt.

Es ist daher die Aufgabe der Erfindung, beim Fügen von Pins bzw. Hairpins in ein Maschinenelement einer elektrischen Maschine, insbesondere in einen Stator oder Rotor, das Risiko von Beschädigungen zu verringern bzw. zu minimieren.

Diese Aufgabe wird durch eine Vorrichtung nach Anspruch 1 und ein Verfahren und eine Verwendung nach den Nebenansprüchen gelöst. Vorteilhafte Ausgestaltungen sind Gegenstand der Unteransprüche.

Gemäß einem ersten Aspekt schafft die Erfindung eine Vorrichtung zum Fügen elektrischer Leiter in ein Maschinenelement einer elektrischen Maschine, umfassend: eine Sammelaufnahme zur Bereitstellung einer Kranzanordnung aus einem oder mehreren Kränzen, die aus elektrisch leitfähigen Pins gebildet sind, und eine Fügeeinrichtung zur Entnahme der Kranzanordnung aus der Sammelaufnahme und zum Einbringen der Kranzanordnung in das Maschinenelement.

Durch die erfindungsgemäße Vorrichtung werden Beschädigungen der Pins und der daraus gebildeten Kränze, die beim direkten Einfügen in das Maschinenelement bzw. einen Stator oder Rotor entstehen können, vermieden. Beim Ausheben aus der Sammelaufnahme werden die Kränze so zueinander positioniert und gehalten, dass sie in Nuten eines Stators oder Rotors geführt werden können, ohne bzw. mit einer nur geringfügigen Relativbewegung der Hairpins bzw. der daraus gebildeten Kränze untereinander. Das minimiert das Risiko von Beschädigungen.

Vorzugsweise wird die Kranzanordnung aus mehreren Kränzen gebildet, wobei die Fügeeinrichtung insbesondere zur gemeinsamen Entnahme der Kränze aus der Sammelaufnahme ausgestaltet ist, um die Kranzanordnung in das Maschinenelement einzubringen.

Dadurch können einzelne Kränze, nachdem sie zum Beispiel in Vorsteckaufnahmen vorgesteckt wurden, in einer weiteren Aufnahme, die hier als Sammelaufnahme bezeichnet ist, mittels der Fügeeinrichtung zusammengeführt und dann mit der Fügeeinrichtung gemeinsam aus der Sammelaufnahme entnommen und in den Stator oder Rotor gefügt werden.

Erfindungsgemäß umfasst die Fügeeinrichtung ein erstes Greifelement und ein zweites Greifelement zum Angreifen der Kranzanordnung an deren Außenseite, wobei die Greifelemente relativ zu der Sammelaufnahme unabhängig voneinander in axialer Richtung bewegbar sind.

Vorteilhaft sind die Greifelemente ringförmig ausgestaltet. Die Greifelemente können vertikal übereinander angeordnet sein und sie können als oberes Greifelement bzw. unteres Greifelement ausgebildet sein.

Insbesondere sind die Greifelemente als Greifringe mit radial bewegbaren Fingerelementen zum Öffnen und Schließen ausgestaltet.

Beispielsweise umfasst die Fügeeinrichtung einen axial beweglichen Gegenhalter zur Positionierung an der Innenseite der Kranzanordnung.

Die Fügeeinrichtung ist insbesondere auch zum Entnehmen der einzelnen Kränze aus einem Vorstecknest und zum Einfügen der einzelnen Kränze in die Sammelaufnahme ausgestaltet.

Bevorzugt umfasst die Fügeeinrichtung mindestens ein erstes Halteelement und ein zweites Halteelement. Insbesondere sind die Haltelemente relativ unabhängig voneinander in axialer Richtung bewegbar. Sie können jeweils als Ringkolben ausgestaltet sein.

Beispielsweise sind die Haltelemente vertikal übereinander angeordnet und wirken insbesondere als Gegenhalter für ein oberes Greifelement und ein unteres Greifelement.

Vorteilhaft weisen die Haltelemente eine Nut zur Aufnahme von Teilen eines Greifelements auf.

Bevorzugt ist eines der Halteelemente an einem Rahmen fixiert, der die Fügeeinrichtung hält.

Insbesondere wird mindestens eines der Halteelemente, zum Beispiel über eine formschlüssige Verbindung, mit einem Greifelement von diesem axial bewegt.

Insbesondere weist die Sammelaufnahme einen Nestbereich zur Aufnahme der Pins und bevorzugt einen Gegenhalter zur Positionierung der Pins an dessen Außenseite auf.

Der Gegenhalter ist insbesondere als Ringkolben ausgestaltet. Er ist zum Beispiel relativ zum Nestbereich axial bewegbar. Vorteilhaft weist er eine Nut zur Aufnahme von Teilen eines Greifelements auf.

Insbesondere wird der Gegenhalter bei Bewegung eines geschlossenen Greifelements in axialer Richtung durch dieses mitgenommen. Bevorzugt ist er relativ zum Nestbereich vorgespannt und zum Beispiel unterhalb des Nestbereichs angeordnet.

Vorteilhafterweise umfasst die Fügeeinrichtung ein Andruckelement zum Drücken der Pins in das Maschinenelement. Das Andruckelement ist zum Beispiel axial bewegbar und bevorzugt glockenförmig ausgestaltet.

Gemäß einem Aspekt schafft die Erfindung ein Verfahren zum Fügen elektrischer Leiter in ein Maschinenelement einer elektrischen Maschine, umfassend die Schritte: Bereitstellen einer Anordnung aus einem oder mehreren Kränzen, die aus zusammengefügten, elektrisch leitfähigen Pins gebildet sind, in einer Sammelaufnahme; Entnahme der Kranzanordnung aus der Sammelaufnahme; Einbringen der Kranzanordnung in das Maschinenelement.

Bevorzugt werden in der Sammelaufnahme mehrere Kränze zusammengeführt, um die Kranzanordnung bereitzustellen. Die Kränze werden bevorzugt gemeinsam aus der Sammelaufnahme entnommen und in das Maschinenelement eingebracht.

Erfindungsgemäß wird die Kranzanordnung durch Öffnen, Schließen und axiales Verschieben von mindestens zwei unabhängig voneinander und relativ zu der Sammelaufnahme axial bewegbaren Greifelementen aus der Sammelaufnahme entnommen.

Insbesondere wirken zum Greifen der Kranzanordnung die axial bewegbaren Greifelemente mit relativ zueinander axial bewegbaren Halteelementen zusammen.

Beispielsweise wirkt zum Greifen der Kranzanordnung mindestens eines der Greifelemente oder ein drittes Greifelement mit einem axial bewegbaren Gegenhalter der Sammelaufnahme zusammen.

Bevorzugt greift zur Entnahme der Kranzanordnung ein Greifelement die Kranzanordnung zunächst an einer ersten axialen Position und bewegt es durch axiale Bewegung teilweise aus der Sammelaufnahme heraus. Vorteilhafterweise greift anschließend ein anderes Greifelement die Kranzanordnung an einer zweiten axialen Position, um durch axiale Bewegung die Kranzanordnung vollständig aus der Sammelaufnahme heraus zu bewegen.

Bevorzugt wird zum Einbringen der Kranzanordnung in das Maschinenelement ein erstes Greifelement axial in Richtung des Maschinenelements bewegt, während zum Beispiel ein zweites Greifelement an seiner axialen Position verbleibt.

Vorteilhaft wird zum Einbringen der Kranzanordnung in das Maschinenelement ein Andruckelement axial in Richtung des Maschinenelements bewegt.

Insbesondere wird zum Einbringen der Kranzanordnung in das Maschinenelement ein Andruckelement an den geöffneten Greifelementen vorbeigeführt, um die Pins vollständig in das Maschinenelement zu fügen.

Zum Beispiel werden die Kränze einzeln aus einem Vorstecknest entnommen und nacheinander der Sammelaufnahme zugeführt, bevor sie gemeinsam aus der Sammelaufnahme entnommen und in das Maschinenelement eingebracht werden. Insbesondere kann dies auch mit derselben Fügeeinrichtung durchgeführt werden wie die Entnahme der Kranzanordnung aus der Sammelaufnahme und das Einbringen der Kranzanordnung in das Maschinenelement.

Vorteilhafterweise werden einer oder mehrere der folgenden Verfahrensschritte durchgeführt:
- Positionieren und Schließen eines unteren Greifelements unterhalb der Sammelaufnahme;
- Axiales Verfahren des unteren Greifelements nach unten zum axialen Richten der Pins;
- Weiteres Schließen des unteren Greifelements zum kraftschlüssigen Greifen der Pins;
- Axiales Verfahren des unteren Greifelements nach oben und Mitnehmen der Pins;
- Schließen eines oberen Greifelements zum Greifen der Pins oberhalb der Sammelaufnahme;
- Öffnen des unteren Greifelements und Verfahren auf eine Position zwischen der Sammelaufnahme und dem oberen Greifelement;
- Schließen des unteren Greifelements;
- Axiales Verfahren des oberen Greifelements nach oben und Mitnehmen der Pins aus der Sammelaufnahme;
- Positionieren der Fügeeinrichtung über dem Maschinenelement;
- Axiales Verfahren des oberen Greifelements nach unten zum teilweisen Einführen der Pins in das Maschinenelement;
- Axiales Verfahren eines Andruckelements nach unten gemeinsam mit dem oberen Greifelement;
- Öffnen des oberen und des unteren Greifelements und weiteres axiales Verfahren des Andruckelements nach unten, zum vollständigen Einfügen der Pins in das Maschinenelement.

Insbesondere wird die erfindungsgemäße Vorrichtung zur Durchführung des erfindungsgemäßen Verfahrens verwendet.

Vorteile und Details der Erfindung, die im Zusammenhang mit der erfindungsgemäßen Vorrichtung genannt sind, gelten auch für das erfindungsgemäße Verfahren und die erfindungsgemäße Verwendung, ebenso wie Vorteile und Details, die im Zusammenhang mit dem erfindungsgemäßen Verfahren genannt sind, auch für die erfindungsgemäße Vorrichtung und für die erfindungsgemäße Verwendung gelten.

Nachfolgend werden Ausführungsbeispiele der Erfindung anhand der beigefügten Zeichnungen beschrieben. Dabei zeigt:
- **Fig. 1**: eine Vorrichtung gemäß einer bevorzugten Ausführungsform der Erfindung als Schnittansicht;
- **Fig. 2**: eine Fügeeinrichtung der in Fig. 1 gezeigten erfindungsgemäßen Vorrichtung in einer Grundstellung;
- **Fig. 3**: die Fügeeinrichtung in einem Zustand, bei dem die Greifelemente voneinander entfernt sind;
- **Fig. 4**: die Fügeeinrichtung in einem Zustand, bei dem die Greifelemente aneinander liegen;
- **Fig. 5**: die Fügeeinrichtung in einem Zustand, bei dem die Greifelemente auseinandergefahren sind;
- **Fig. 6**: die Fügeeinrichtung in einem Zustand, bei dem ein Andruckelement nach unten gefahren ist;
- **Fig. 7**: eine Sammelaufnahme der in Fig. 1 gezeigten Vorrichtung als Schnittansicht;
- **Fig. 8a und 8b**: die in Fig. 7 gezeigte Sammelaufnahme als Ansicht schräg von oben;
- **Figuren 9 bis 24**: die erfindungsgemäße Vorrichtung in verschiedenen Zuständen bei der Durchführung eines beispielhaften erfindungsgemäßen Verfahrens;

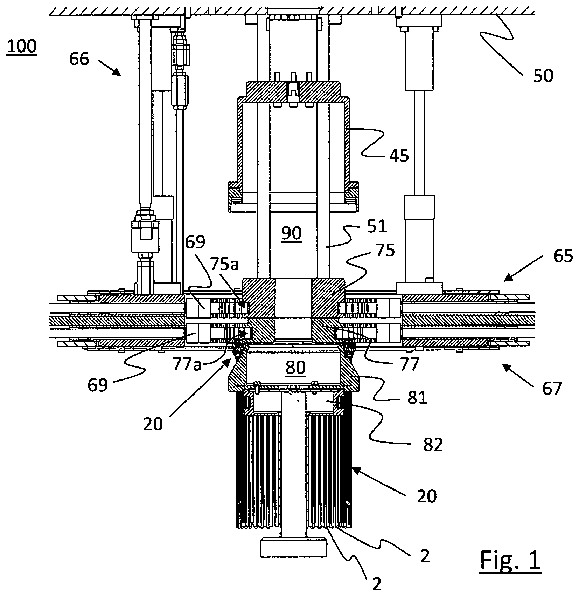

In **Fig. 1** ist eine erfindungsgemäße Vorrichtung 100 gemäß einer bevorzugten Ausführungsform als Schnittansicht dargestellt. Die Vorrichtung 100 dient zum Fügen elektrischer Leiter in ein Maschinenelement einer elektrischen Maschine, in diesem Beispiel zum Fügen von Pins oder Hairpins in einen Stator eines Elektromotors, der insbesondere zum Einsatz in Kraftfahrzeugen geeignet ist.

Die Vorrichtung 100 hat eine Sammelaufnahme 80. Diese dient zur Bereitstellung einer Kranzanordnung 20, die aus einem oder mehreren Kränzen gebildet ist. Die Kränze sind aus elektrisch leitfähigen Pins 2 gebildet. Eine Fügeeinrichtung 90 dient zur Entnahme der Kranzanordnung 20 aus der Sammelaufnahme 80 und zum Einbringen der Kranzanordnung in ein Maschinenelement.

Die Kranzanordnung 20 kann aus mehreren einzelnen Kränzen gebildet sein. Die Fügeeinrichtung 90 ist so ausgestaltet, dass sie die Kränze gemeinsam als gesamte Anordnung aus der Sammelaufnahme 80 entnimmt und diese anschließend exakt in dieser Anordnung in das Maschinenelement einbringt.

Die Fügeeinrichtung 90 kann aber auch dazu verwendet werden, einzelne aus Pins 2 gebildete Kränze aus einem Vorstecknest zu entnehmen und diese in die Sammelaufnahme 80 einzufügen.

Zum Greifen der Kranzanordnung 20 und auch zum Greifen einzelner Pins 2 aus einem hier nicht dargestellten Vorstecknest ist in der Fügeeinrichtung 90 ein erstes bzw. oberes Greifelement 65 und ein zweites bzw. unteres Greifelement 67 zum Angreifen der Kranzanordnung 20 bzw. der Pins 2 vorgesehen.

Die Greifelemente 65 und 67 sind vertikal übereinander liegend angeordnet. Sie sind ringförmig ausgestaltet und greifen die Kranzanordnung 20 an deren Außenseite an. Die Greifelemente 65, 67 bilden auf diese Weise einen oberen und einen unteren Greifring.

Zum Öffnen und Schließen sind die Greifelemente 65, 67 mit radial bewegbaren Fingerelementen 69 versehen. Beim Schließen des jeweiligen Greifelements 65, 67 bewegen sich die Fingerelemente 69 radial nach innen in Richtung auf das Zentrum des Greifelements 65 bzw. 67. Zum Öffnen des Greifrings 65 bzw. 67 ziehen sich die Fingerelemente 69 radial nach außen zurück.

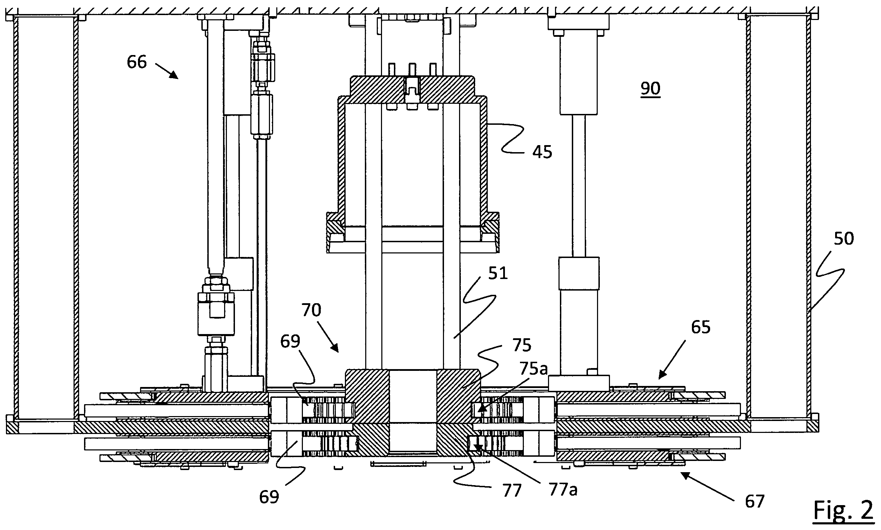

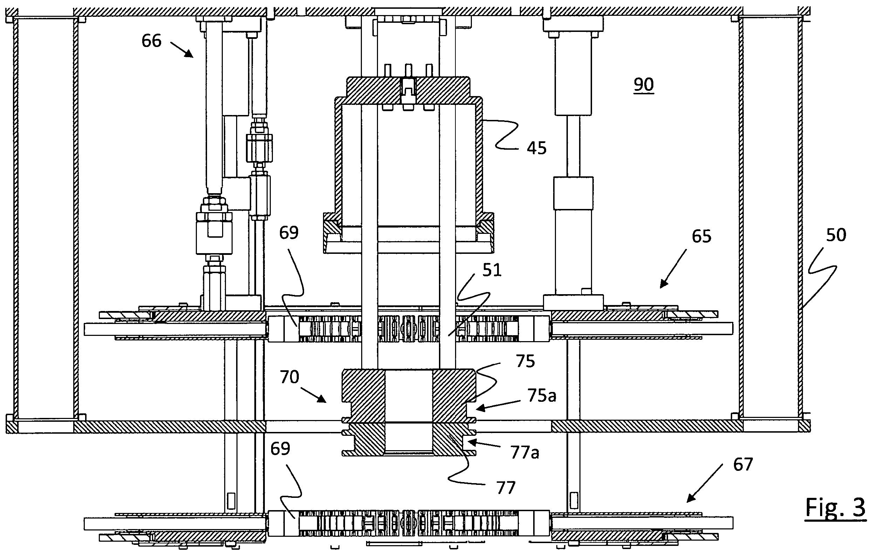

Beide Greifelemente 65, 67 sind in einem Rahmen 50 in axialer Richtung bewegbar gehalten und können unabhängig voneinander in axialer Richtung, in diesem Fall vertikal, relativ zum Rahmen 50 bewegt werden (siehe auch **Fig. 2** **und** **3****).** Das heißt, es ist auch das untere Greifelement 67 relativ zum Rahmen 50 und unabhängig vom oberen Greifelement 65 beweglich. Das obere Greifelement 65 wird durch einen Aktuator 66 angetrieben.

In der Fügeeinrichtung 90 sind zwei Ringkolben vertikal übereinander angeordnet, die ein erstes bzw. oberes Halteelement 75 und ein zweites bzw. unteres Halteelement 77 bilden. Es können aber auch mehr als zwei derartige Halteelemente vorgesehen sein. Gemeinsam bilden die als Ringkolben ausgestalteten Halteelemente 75, 77 eine Zentraleinheit, die als Gegenhaltung 70 für die radial von außen greifenden Greifelemente 65, 67 dient. Ebenso wirken die Halteelemente 75, 77 jeweils für sich als Gegenhalter für das obere bzw. für das untere Greifelement 65 bzw. 67.

Das als Ringkolben geformte untere Halteelement 77 ist über ein Gestänge 51 mit dem Rahmen 50 der Fügeeinrichtung 90 verschraubt und dadurch mit diesem fest verbunden (siehe auch **Fig. 3****).**

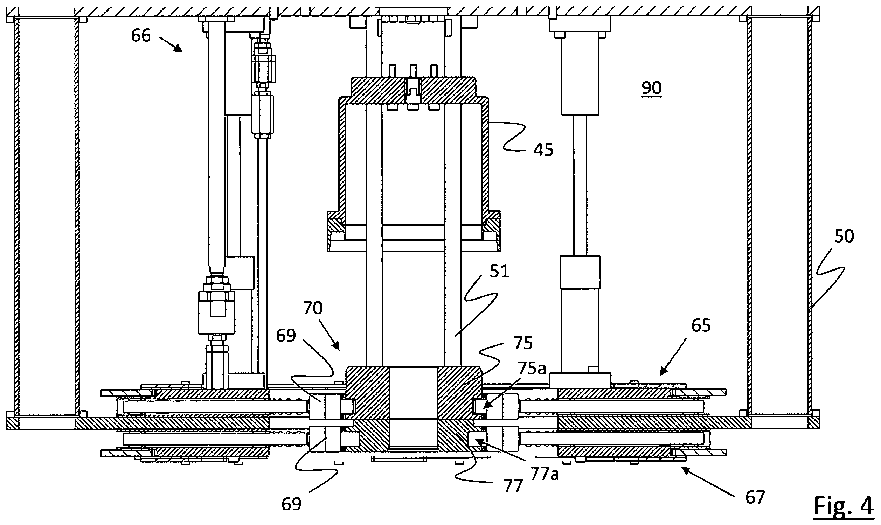

Das obere Haltelement 75 ist relativ zum unteren Halteelement 77 und relativ zum Rahmen 50 axial bewegbar. Alternativ können auch beide Halteelemente 75, 77 unabhängig voneinander bewegbar sein. Sie weisen jeweils an ihrer Außenseite eine ringförmige Nut 75a, 77a zur Aufnahme der Fingerelemente 69 der Greifelemente 65, 67 auf. Die Fingerelemente 69 können somit in die Nuten 75a bzw. 77a der Halteelemente 75, 77 eintauchen (siehe auch **Fig. 4****).**

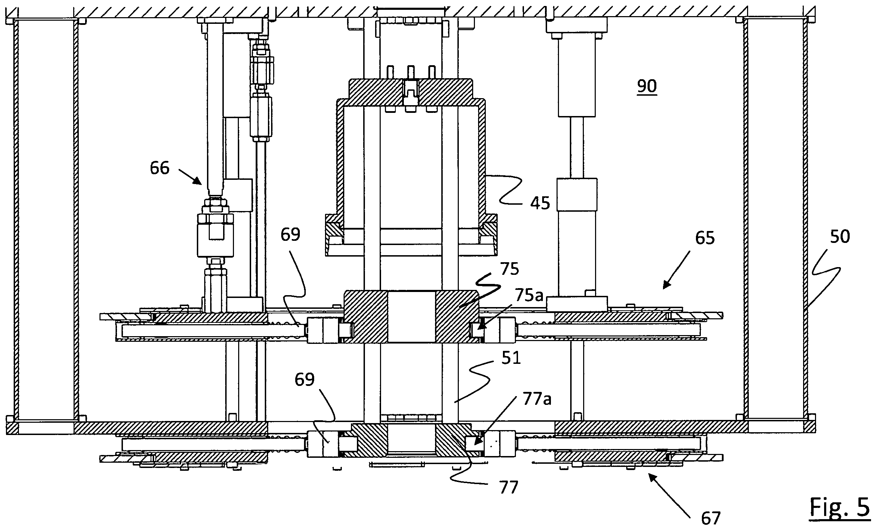

Das als Ringkolben geformte obere Halteelement 75 ist axial auf dem Gestänge 51 geführt. Werden die Fingerelemente 69 des oberen Greifelements 65 geschlossen, tauchen diese in die ringförmige Nut 75a des oberen Halteelements 75 ein und bilden damit eine formschlüssige Verbindung. Wird das obere Greifelement 65 in diesem Zustand axial bewegt, folgt der obere Ringkolben bzw. das obere Halteelement 75 dieser Bewegung (siehe auch **Fig. 5****).**

Es ist daher kein eigener Aktuator für das obere Halteelement 75 vorgesehen. Stattdessen wird das obere Halteelement 75 durch den Aktuator 66 des oberen Greifelements 65 mit diesem mit bewegt.

Die Fügeeinrichtung 90 weist ein Andruckelement 45 auf, das als Druckplatte ausgestaltet ist. Das Andruckelement 45 ist zum Drücken der als Kranzanordnung 20 vorliegenden Pins 2 in das Maschinenelement ausgestaltet, nachdem die Kranzanordnung 20 aus der Sammelaufnahme 80 entnommen wurde.

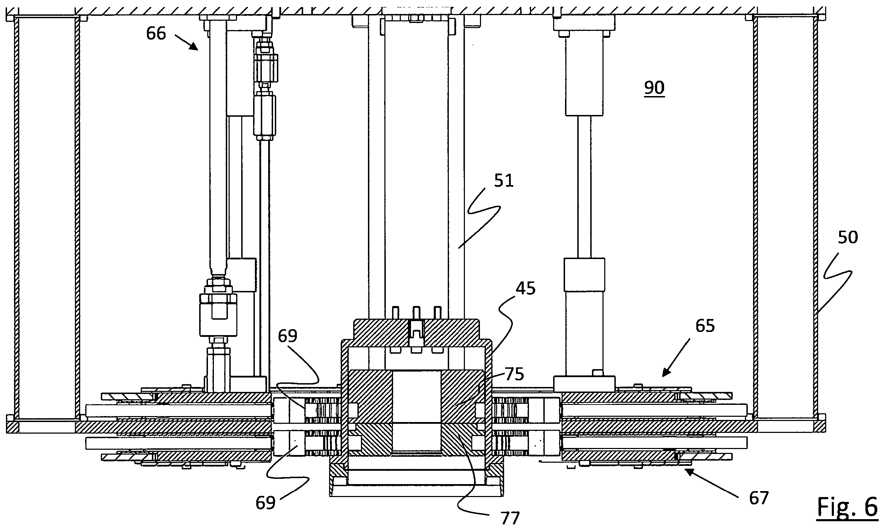

Das Andruckelement 45 ist zu diesem Zweck axial bewegbar und glockenförmig ausgestaltet. Durch seine Glockenform kann das Andruckelement 45 über das obere als Ringkolben geformte Halteelement 75 und über das untere als Ringkolben gestaltete Halteelement 77 gefahren werden, um die Pins 2 auf die geforderte Tiefe in den Stator bzw. das Maschinenelement zu fügen (s. **Fig. 5** **und** **6****).**

Hierzu sind die Fingerelemente 69 des oberen Greifelements 65 und des unteren Greifelements 67 geöffnet bzw. radial nach außen zurückgezogen (s. **Fig. 6****).**

Die in **Fig. 1** gezeigte Sammelaufnahme 80 weist einen Nestbereich 81 zur Aufnahme der Pins 2 auf, die den Kranz bzw. Pinkranz oder mehrere solcher Pinkränze bilden.

In der Sammelaufnahme 80 ist unterhalb des Nestbereichs 81 und axial fluchtend zu diesem ein Ringkolben 82 angeordnet, der als Gegenhalter zur Positionierung der Pins 2 an seiner Außenseite dient.

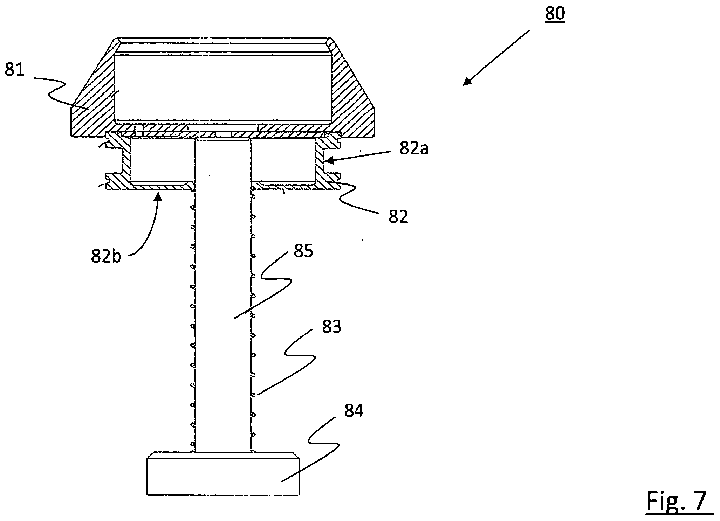

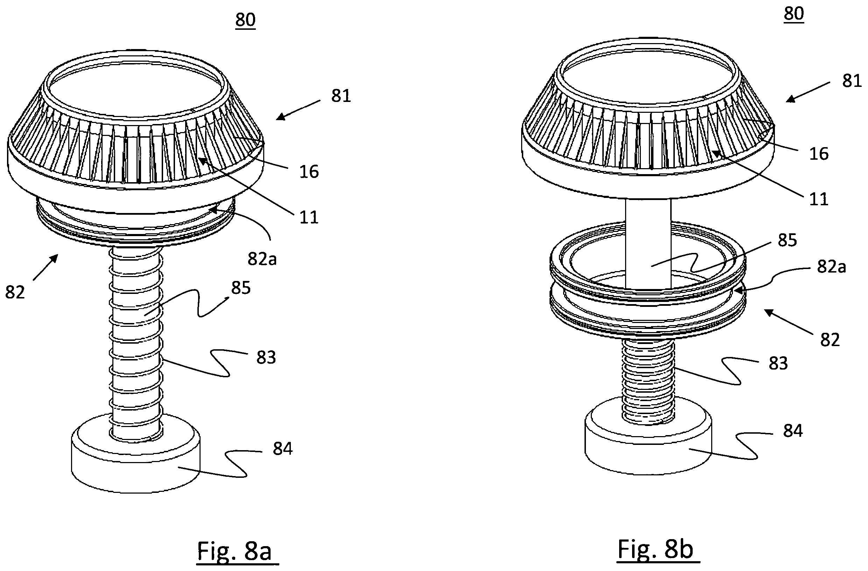

In den **Figuren 7****,** **8a** **und** **8b** ist die Sammelaufnahme 80 mit dem Nestbereich 81 genauer dargestellt.

Der als Ringkolben ausgestaltete Gegenhalter 82 ist relativ zum Nestbereich 81 axial bewegbar. Der Gegenhalter 82 der Sammelaufnahme 80 weist eine ringförmige Nut 82a bzw. Ringnut zur Aufnahme von Teilen eines Greifelements auf, in diesem Ausführungsbeispiel der Fingerelemente 69 des unteren Greifelements 67. Der Gegenhalter 82 ist so angeordnet, dass beim Schließen des unteren Greifelements 67 dessen Fingerelemente 69 in die Nut 82a eintauchen, wenn sich das untere Greifelement 67 und der Gegenhalter 82 auf derselben vertikalen Position befinden.

Der Gegenhalter 82 ist gegenüber dem Nestbereich 81 axial beweglich und wird bei einer Bewegung des geschlossenen unteren Greifelements 67 in axialer Richtung durch dieses mitgenommen, sofern dessen Fingerelemente 69 in die Nut 82a eingreifen.

Der Gegenhalter 82 ist relativ zum Nestbereich 81 der Sammelaufnahme 80 mit einem als Spannfeder ausgebildeten Spannelement 83 vorgespannt bzw. federvorgespannt. Dadurch befindet er sich unmittelbar unterhalb des Nestbereichs 81. Auf diese Weise können die Fingerelemente 69 des unteren Greifelements 67 in unmittelbarer Nähe zum Nest bzw. Nestbereich 81 mit ihren vorderen Enden zwischen die Hairpins bzw. Pins 2 eintauchen. An dieser Stelle sind die Pins 2 wesentlich besser bzw. sicherer axial geführt, als es weiter unten der Fall wäre.

Das Spannelement 83 befindet sich zwischen einer am unteren Ende des Sammelelements 80 angeordneten Basis 84 und drückt gegen die Unterseite 82b des als Ringkolben gestalteten Gegenhalters 82, sodass dieser nach oben zum Nestbereich 81 hin gespannt ist. Zur Führung des Gegenhalters 82 bei dessen axialer Bewegung ist eine Axialführung 85 vorgesehen, an deren Außenseite das Spannelement 83 angeordnet ist.

**Fig. 8a und Fig. 8b** zeigen die Sammelaufnahme 80, wobei sich der Gegenhalter 82 in einer oberen vertikalen Position (Fig. 8a) bzw. in einer unteren vertikalen Position (Fig. 8b) befindet. Sofern das Greifelement 67 keine Kraft auf den Gegenhalter 82 ausübt, wird er durch das axiale Spannelement 83 in unmittelbarer Nähe des Nestbereichs 81 gehalten.

Für den Gegenhalter 82 ist kein eigener Aktuator vorgesehen, sondern er wird axial durch den unteren Greifring 67 bewegt, wenn dieser in die Nut 82a eingreift.

In der Sammelaufnahme 80 sind Nuten 11 zur Aufnahme der Pins 2 bzw. der Pinkränze und Anordnungen aus mehreren Pinkränzen aufzunehmen. Die Nuten 11 der Sammelaufnahme 80 sind größer dimensioniert als die Nuten des Maschinenelements bzw. Stators, in den sie später eingefügt werden sollen. Dadurch wird eine Beweglichkeit der Hairpins bzw. Kränze untereinander möglich, wodurch Beschädigungen vermieden werden.

Die Nuten 11 der Sammelaufnahme 80 weisen an ihren oberen Enden Einführschrägen 16 auf. Dadurch können die Pins 2 bzw. die aus den Pins 2 bestehenden Kränze mit Hilfe der Schwerkraft in ihre jeweilige Position fallen, um dort die Kranzanordnung zu bilden. Alternativ oder zusätzlich können dort auch Absätze ausgebildet sein.

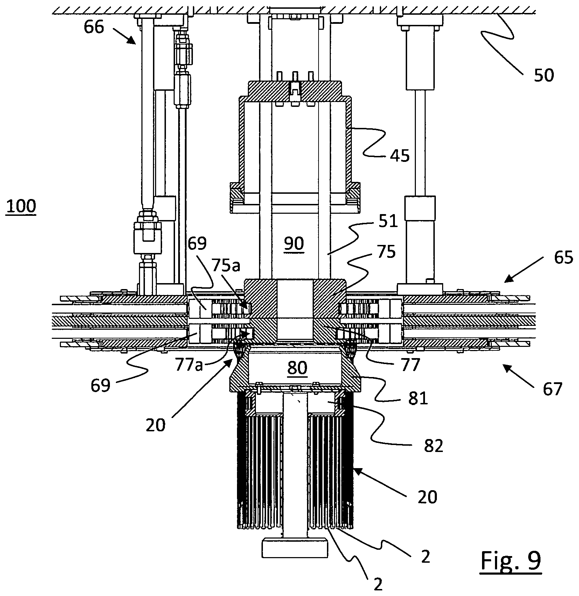

Nachfolgend wird ein Ausführungsbeispiel für das erfindungsgemäße Verfahren anhand der **Figuren 9 bis 24** beschrieben.

Das Verfahren dient zum Fügen elektrischer Leiter in ein Maschinenelement einer elektrischen Maschine, hier beispielhaft in einen Stator eines Elektromotors. Das Verfahren lässt sich ebenso mit einem Rotor oder ähnlichen Maschinenelementen für elektrische Maschinen wie zum Beispiel Elektromotoren, Generatoren und Ähnliches durchführen.

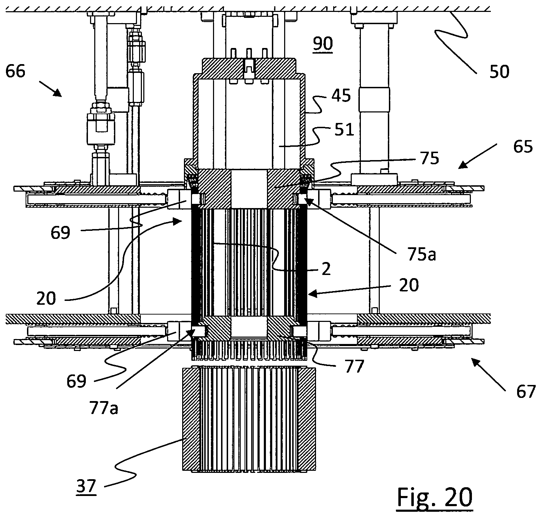

Zunächst wird eine Anordnung 20 aus einem oder mehreren Kränzen, die aus zusammengefügten, elektrisch leitfähigen Pins 2 gebildet sind, in der Sammelaufnahme 80 bereitgestellt (siehe **Fig. 9****).** Anschließend wird die Kranzanordnung 20 aus der Sammelaufnahme 80 entnommen und in den Stator 37 eingefügt (s. **Fig. 20****).**

In diesem Ausführungsbeispiel sind in der Sammelaufnahme 80 zuvor mehrere Kränze zusammengeführt worden, um dort die Kranzanordnung 20 aus mehreren Kränzen bzw. Pinkränzen zu bilden und bereitzustellen. Die Kränze werden gemeinsam aus der Sammelaufnahme 80 entnommen und gemeinsam in den Stator 37 eingebracht. Es ist aber auch möglich, die Pins einzeln der Sammelaufnahme 80 zuzuführen.

**Figur 9** zeigt eine Ausgangsposition für das Ausheben der Kränze bzw. Kranzanordnung 20 aus der Sammelaufnahme 80. Die Kranzanordnung 20 wird durch Öffnen, Schließen und axiales Verschieben der beiden unabhängig voneinander bewegbaren Greifelementen 65 und 67 aus der Sammelaufnahme 80 entnommen und dadurch der Fügeeinrichtung 90 zugeführt.

Hierzu wird die Fügeeinrichtung 90 wechselweise zwischen der Sammelaufnahme 80 und dem Stator 37 mit einem Linearportal oder ähnlichem bewegt. Es kann auch wechselweise die Sammelaufnahme 80 und der Stator 37 der Fügeeinrichtung 90 zugeführt werden, zum Beispiel mit einem Rundtisch.

Zum Greifen und Entnehmen der Kranzanordnung 20 aus der Sammelaufnahme 80 sowie zum Einfügen der Kranzanordnung 20 in den Stator 37 wirken die axial bewegbaren Greifelemente 65, 67 mit den relativ zueinander axial bewegbaren Halteelementen 75, 77 sowie mit dem Gegenhalter 82 der Sammelaufnahme zusammen.

Zunächst werden die Fügeeinrichtung 90 und die Sammelaufnahme 80 zueinander positioniert. Die Fügeeinrichtung 80 ist dabei in ihrer Grundstellung. In dieser Position ist das obere ringförmige Greifelement 65 in seiner unteren Stellung und das untere ringförmige Greifelement 67 in seiner oberen Stellung.

Beide Greifelemente 65, 67 bzw. deren jeweilige Fingerelemente 69 sind geöffnet. Die Fügeeinrichtung 90 befindet sich über der Sammelaufnahme 80, die mit den Kränzen bzw. der Kranzanordnung 20 bestückt ist.

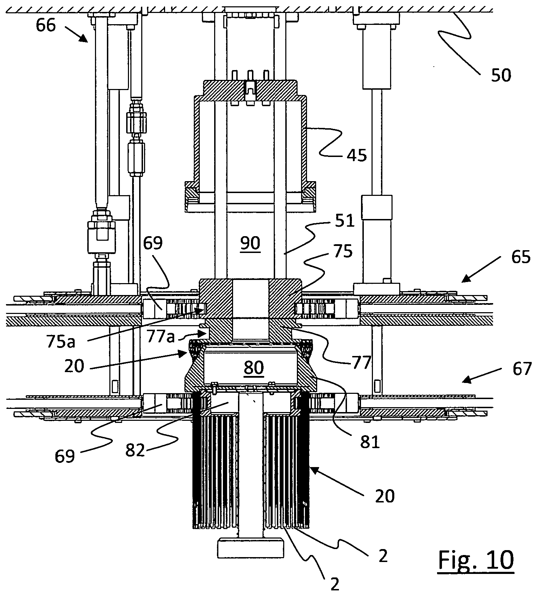

Nun wird das untere Greifelement 67 relativ zum oberen Greifelement 65 und relativ zum Rahmen 50 axial nach unten verfahren und dadurch auf eine Zwischenstellung gebracht (siehe **Fig. 10****).** Diese Stellung entspricht der obersten Stellung des als Ringkolben ausgebildeten Gegenhalters 82 der Sammelaufnahme 80.

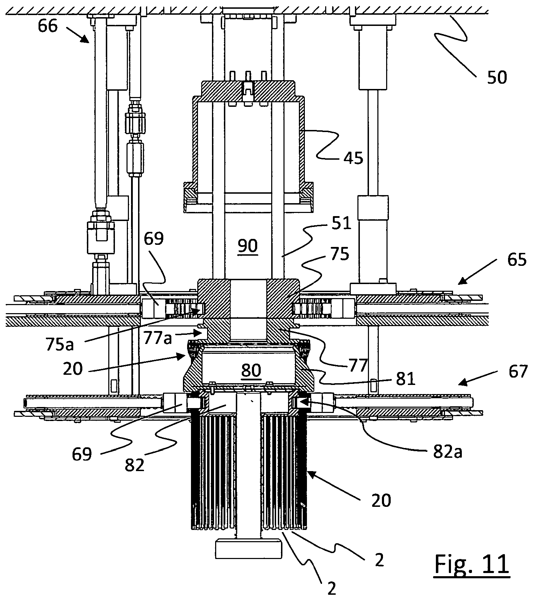

Im nächsten Schritt werden die Fingerelemente 69 des unteren Greifelements 65 geschlossen, das heißt radial nach innen bewegt. Dadurch tauchen die Spitzen der Fingerelemente 69 in die ringförmige Nut 82a des Gegenhalters 82 der Sammelaufnahme 80 ein. Die Fingerelemente spannen die als Kupferdrähte ausgebildeten Hairpins oder Pins 2 noch nicht gegen die Mantelfläche des Gegenhalters 82 (siehe **Fig. 11****).**

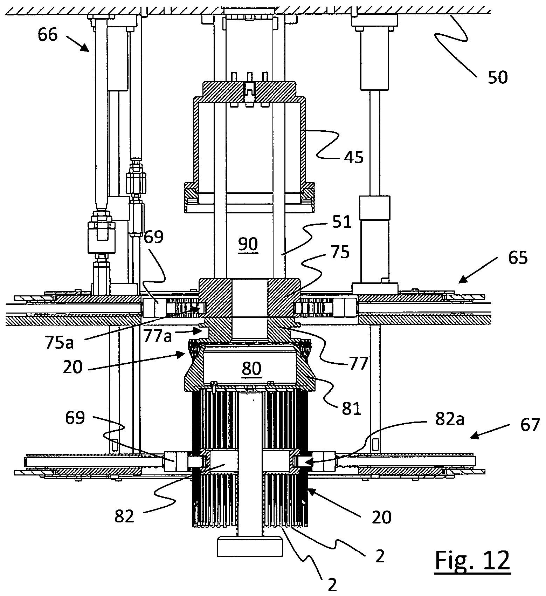

Anschließend wird das untere Greifelement 67 auf seine unterste Stellung verfahren. Dabei wird der Ringkolben bzw. Gegenhalter 82 mitgenommen und ebenfalls nach unten bewegt. Die Bewegung ist ähnlich eines Kammes, da die Fingerelemente 69 geschlossen sind bzw. formschlüssig anliegen (siehe **Fig. 12****).**

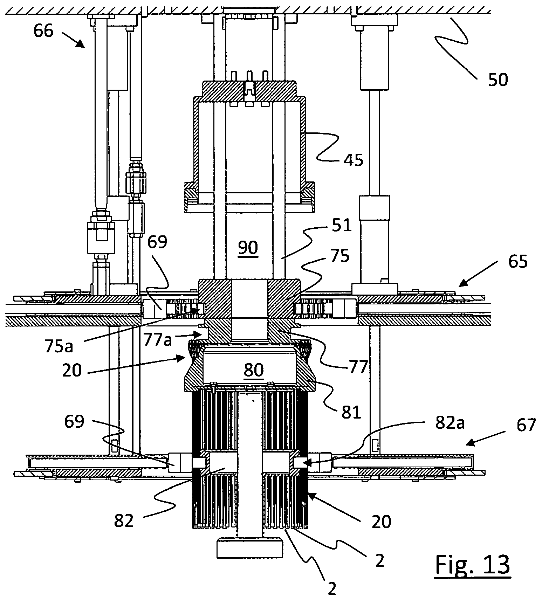

Nun werden die Fingerelemente 69 des unteren Greifelements 67 weiter geschlossen, sodass die Kupferdrähte bzw. Hairpins oder Pins 2 gegen die Mantelfläche des Gegenhalters 82 gedrückt bzw. gespannt werden. Die Pins 2 werden dadurch kraftschlüssig gespannt (siehe **Fig. 13****).**

Jetzt wird der untere Greifring 67 auf seine Zwischenstellung verfahren, die der obersten Stellung des Gegenhalters 82 der Sammelaufnahme 80 entspricht.

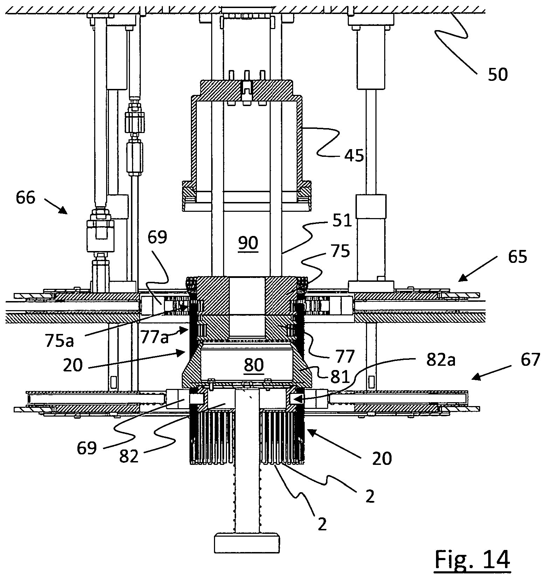

Dadurch wird der Gegenhalter 82 der Sammelaufnahme 80 mit den damit kraftschlüssig verspannten Pins 2 axial nach oben geschoben, das heißt relativ zum Nest bzw. Nestbereich 81. Die Bewegung bzw. Verschiebung erfolgt genau so weit, dass die Fingerelemente 69 des oberen Greifelements 65 unter dem Dach der Kupferstäbe bzw. Pins 2 geschlossen werden können (siehe **Fig. 14****).**

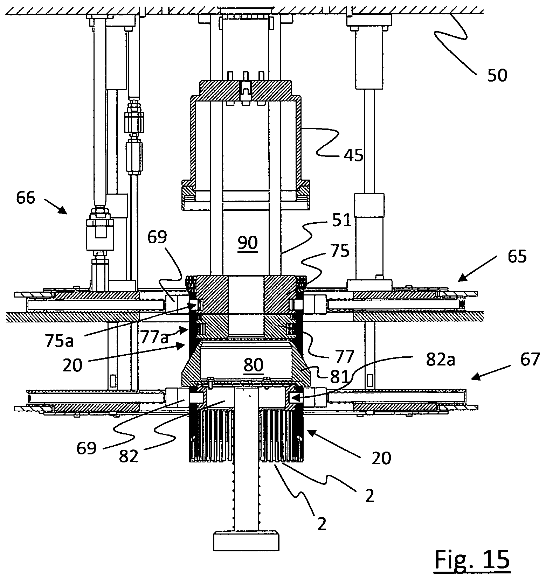

Anschließend werden die Fingerelemente 69 des oberen Greifelements 65 unterhalb des Dachs der Pins 2 geschlossen. Dabei kann eine kraftschlüssige oder formschlüssige Verbindung erfolgen. Die Fingerelemente 69 untergreifen die Hairpins bzw. Pins 2 unterhalb der Hairpindächer (siehe Fig. **15****).**

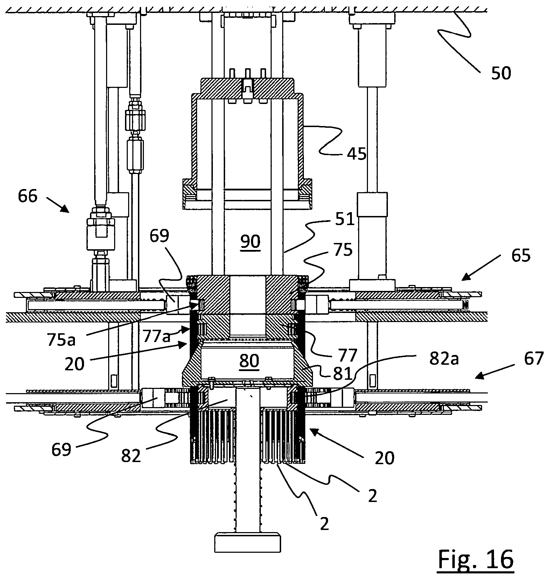

Im nächsten Schritt erfolgt das Öffnen des unteren Greifelements 67. Der Kranz bzw. die Kranzanordnung 20 ist durch die geschlossenen Fingerelemente 69 des oberen Greifelements 65 axial fixiert (siehe **Fig. 16****).**

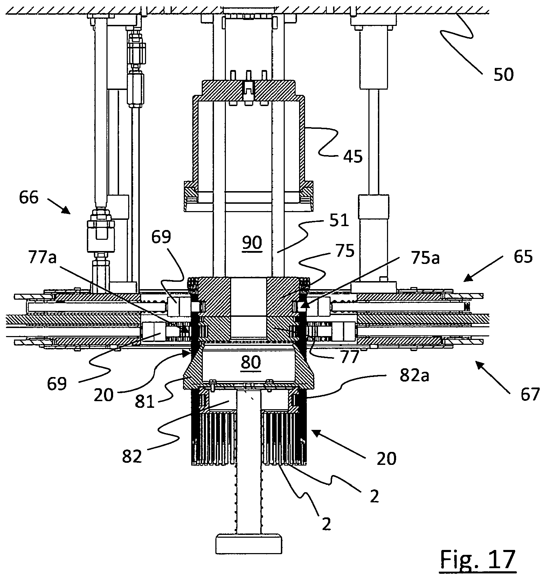

Jetzt wird das untere Greifelement 67 auf seine oberste Stellung verfahren. Dabei ist es in derselben axialen Position wie das untere Halteelement 77 (siehe **Fig. 17****).**

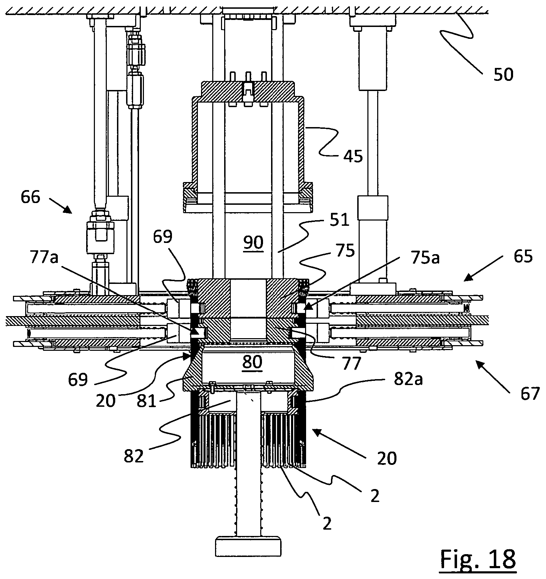

Nun werden die Fingerelemente 69 des unteren Greifelements 67 geschlossen (siehe **Fig. 18****).**

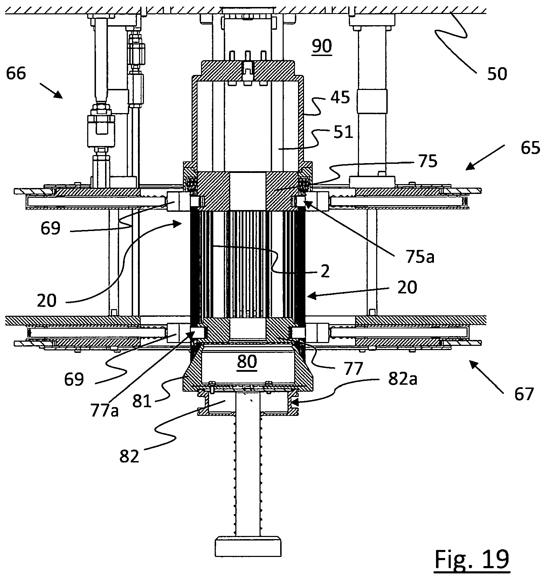

Danach wird das obere Greifelement 65 auf seine oberste Stellung verfahren. Dadurch werden auch der Ringkolben der Fügeeinrichtung 90, das heißt das obere Halteelement 75, über eine formschlüssige Verbindung, sowie ebenfalls die Pins 2, axial nach oben geschoben (siehe **Fig. 19****).**

Hier ist nicht zwangsläufig eine kraftschlüssige Verbindung zwischen dem oberen Halteelement 65 der Fügeeinrichtung 90 und den Kupferdrähten, Hairpins oder U-förmigen Pins 2 nötig, da sich die Fingerelemente 69 unterhalb des Hairpindachs befinden und dies somit untergreifen. Handelt es sich aber beispielsweise um I-förmige Pins, so erfolgt eine Verspannung des Greifelements 65 der Fügeeinrichtung 90 mit den Kupferdrähten bzw. Pins 20 und dem Halteelement 75, was ebenfalls mit der hier gezeigten Vorrichtung durchführbar ist.

Das untere Greifelement 67 und das untere Halteelement 77 bewegen sich dabei noch nicht und bewirken dadurch eine Führung und axiale sowie radiale Ausrichtung der unteren Enden der Pins 2.

Durch das axiale Verfahren des oberen Greifelements 65 werden die Pins 2 aus der Sammelaufnahme 80 ausgehoben. Durch den definierten Abstand der beiden Greifringe 65, 67 zueinander, der abhängig von der Länge der Pins 2 ist, sind die Pins 2 optimal geführt. Die Führung erfolgt dabei ganz oben unterhalb des Kranz- oder Hairpindachs bzw. ganz unten an den Spitzen bzw. Enden der Pins 2.

Nach der Entnahme der Pins 2 aus der Sammelaufnahme 80 erfolgt das Fügen der Kränze bzw. der mehrlagigen Kranzanordnung 20 in den Stator 37, was in den **Figuren 20 bis 24** gezeigt ist.

Zunächst werden die gesamte Fügeeinrichtung 90 und der Stator 37 zueinander positioniert. Im Stator 37 kann sich Isolationspapier befinden. Nun befindet sich unterhalb der Fügeeinrichtung 90 und axial dazu ausgerichtet der Stator 37 (siehe **Fig. 20****).**

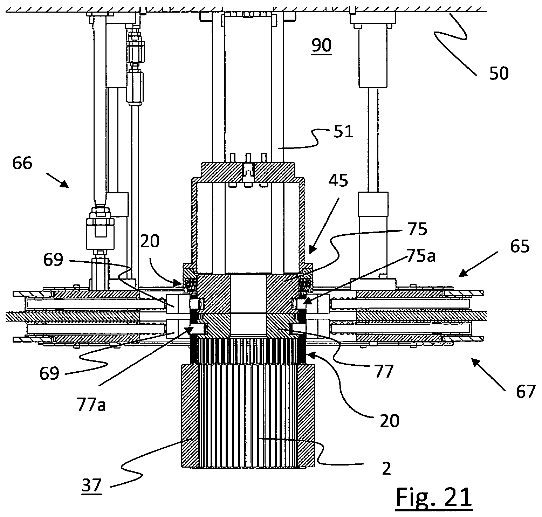

Nun werden das als Druckplatte gestaltete Andruckelement 45 und das als Greifring gestaltete obere Greifelement 65 axial nach unten bewegt. Die Kupferdrähte bzw. Pins 2 oder Hairpins werden dadurch teilweise in den Stator 37 eingeführt (siehe Fig. 21).

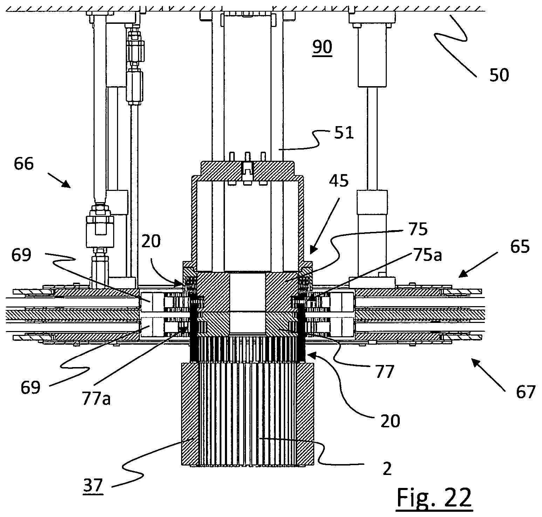

Anschließend werden die Fingerelemente 69 des oberen Greifelements 65 und des unteren Greifelements 67 geöffnet, sodass das Andruckelement 45 daran vorbeigeführt werden kann (siehe **Fig. 22****).**

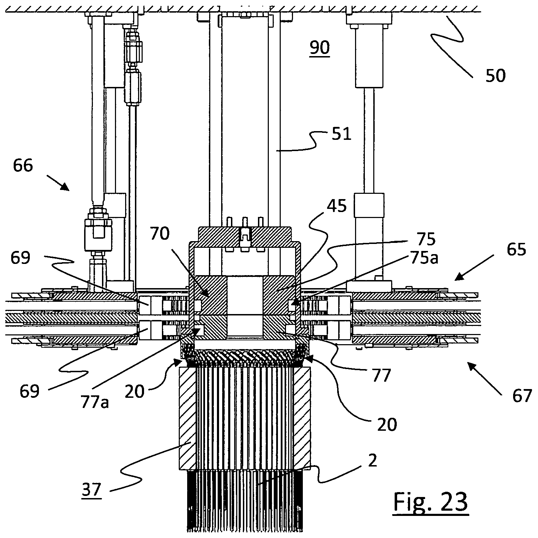

Danach wird das Andruckelement 45 axial nach unten bewegt bis die Pins 2 auf Endtiefe in den Stator 37 gefügt sind. Das Andruckelement schiebt sich dadurch über die aus dem oberen und dem unteren Halteelement 75, 77 gebildete Zentraleinheit. Dies ist aufgrund der Glockenform des Andruckelements 45 möglich (siehe **Fig. 23****).**

Die beiden letzten Schritte, wie sie in den Figuren 22 und 23 gezeigt sind, können auch alternativ in zwei Schleifen abgefahren bzw. durchgeführt werden:
- Öffnen der Fingerelemente 69 des oberen Greifelements 65;
- Axiales Zustellen des Andruckelements 45 bis kurz vor die Fingerelemente 69 des unteren Greifelements 67;
- Öffnen der Fingerelemente 69 des unteren Greifelements 67;
- Axiales nach unten Bewegen des Andruckelements 45 bis die Pins 2 auf Endtiefe im Stator 37 sind.

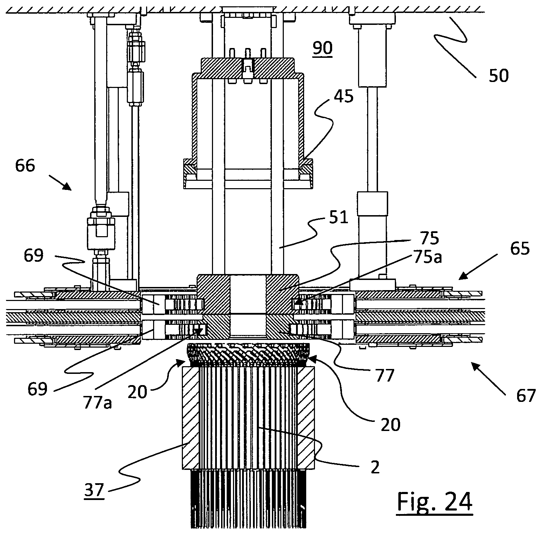

Schließlich wird das Andruckelement 45 wieder axial nach oben bewegt, bis die Fügeeinrichtung 90 wieder in ihrer Grundstellung steht. Die Pins 2 sind auf definierte Tiefe in den Stator 37 gefügt worden (siehe **Fig. 24****).**

### Bezugszeichenliste:

- 2: Drahtstücke (Pins)
- 11: Nuten der Sammelaufnahme
- 16: Einführschrägen
- 20: Anordnung von Kränzen, Kranzanordnung
- 37: Maschinenelement
- 45: Andruckelement
- 50: Rahmen
- 51: Gestänge
- 65: erstes bzw. oberes Greifelement
- 66: Aktuator
- 67: zweites bzw. unteres Greifelement
- 69: Fingerelemente
- 70: Gegenhalter
- 75: erstes bzw. oberes Halteelement
- 75a: Nut
- 77: zweites bzw. unteres Halteelement
- 77a: Nut
- 80: Sammelaufnahme
- 81: Nestbereich
- 82: Gegenhalter der Sammelaufnahme
- 82a: Nut
- 82b: Unterseite
- 83: Spannelement
- 84: Basis
- 85: Axialführung
- 90: Fügeeinrichtung
- 100: Vorrichtung

## Patentansprüche

1. Vorrichtung zum Fügen elektrischer Leiter in ein Maschinenelement einer elektrischen Maschine, umfassend:
eine Sammelaufnahme (80) zur Bereitstellung einer Kranzanordnung (20) aus einem oder mehreren Kränzen, die aus elektrisch leitfähigen Drahtstücken (2) gebildet sind;
eine Fügeeinrichtung (90) zur Entnahme der Kranzanordnung (20) aus der Sammelaufnahme (80) und zum Einbringen der Kranzanordnung (20) in das Maschinenelement (37), wobei die Fügeeinrichtung (90) ein Greifelement (65, 67) zum Angreifen der Kranzanordnung (20) an deren Außenseite umfasst, **dadurch gekennzeichnet, dass** die Fügeeinrichtung (90) ein erstes Greifelement (65) und
ein zweites Greifelement (67) zum Angreifen der Kranzanordnung (20) an deren Außenseite umfasst, wobei die Greifelemente (65, 67) relativ zur Sammelaufnahme (80) unabhängig voneinander in axialer Richtung bewegbar sind.

2. Vorrichtung nach Anspruch 1, **dadurch gekennzeichnet, dass**
2.1 die Greifelemente (65, 67) ringförmig ausgestaltet sind, und/oder
2.2 die Greifelemente (65, 67) vertikal übereinander angeordnet sind und als oberes Greifelement (65) bzw. unteres Greifelement (67) ausgebildet sind, und/oder
2.3 die Greifelemente (65, 67) als Greifringe mit radial bewegbaren Fingerelementen (69) zum Öffnen und Schließen ausgestaltet sind.

3. Vorrichtung nach einem der vorhergehenden Ansprüche, **dadurch gekennzeichnet, dass** die Fügeeinrichtung (90)
3.1 einen axial beweglichen Gegenhalter (70) zur Positionierung an der Innenseite der Kranzanordnung (20) umfasst, und/oder
3.2 auch zum Entnehmen der einzelnen Kränze aus einem Vorstecknest und zum Einfügen der einzelnen Kränze in die Sammelaufnahme (80) ausgestaltet ist.

4. Vorrichtung nach einem der vorhergehenden Ansprüche, **dadurch gekennzeichnet, dass** die Fügeeinrichtung (90) ein erstes Halteelement (75) und ein zweites Halteelement (77) umfasst, wobei
4.1 die Haltelemente (75, 77) unabhängig voneinander in axialer Richtung bewegbar sind, und/oder
4.2 die Haltelemente (75, 77) jeweils als Ringkolben ausgestaltet sind, und/oder
4.3 die Haltelemente (75, 77) vertikal übereinander angeordnet sind und als Gegenhalter für ein oberes Greifelement (65) und ein unteres Greifelement (67) wirken, und/oder
4.4 die Haltelemente (75, 77) eine Nut (75a, 77a) zur Aufnahme von Teilen eines Greifelements (65, 67) aufweisen, und/oder
4.5 eines der Halteelemente (77) an einem Rahmen (50) fixiert ist, der die Fügeeinrichtung (90) hält, und/oder
4.6 mindestens eines der Halteelemente (75) über eine formschlüssige Verbindung mit einem Greifelement (65) von diesem axial bewegt wird.

5. Vorrichtung nach einem der vorhergehenden Ansprüche, **dadurch gekennzeichnet, dass** die Sammelaufnahme (80) einen Nestbereich (81) zur Aufnahme der Drahtstücke (2) und einen Gegenhalter (82) zur Positionierung der Drahtstücke (2) an dessen Außenseite aufweist.

6. Vorrichtung nach Anspruch 5, **dadurch gekennzeichnet, dass** der Gegenhalter (82)
6.1 als Ringkolben ausgestaltet ist, und/oder
relativ zum Nestbereich (81) axial bewegbar ist, und/oder
6.2 eine Nut (82a) zur Aufnahme von Teilen eines Greifelements (65, 67) aufweist, und/oder
6.3 bei Bewegung eines geschlossenen Greifelements (65, 67) in axialer Richtung durch dieses mitgenommen wird, und/oder
6.4 relativ zum Nestbereich (81) vorgespannt ist, und/oder
6.5 unterhalb des Nestbereichs (81) angeordnet ist.

7. Vorrichtung nach einem der vorhergehenden Ansprüche, **dadurch gekennzeichnet, dass** die Fügeeinrichtung (90) ein Andruckelement (45) zum Drücken der Drahtstücke (2) in das Maschinenelement (37) umfasst, wobei das Andruckelement (45)
7.1 axial bewegbar ist, und/oder
7.2 glockenförmig ausgestaltet ist.

8. Verfahren zum Fügen elektrischer Leiter in ein Maschinenelement einer elektrischen Maschine, umfassend die Schritte:
Bereitstellen einer Kranzanordnung (20) aus einem oder mehreren Kränzen, die aus zusammengefügten, elektrisch leitfähigen Drahtstücken (2) gebildet sind, in einer Sammelaufnahme (80);
Entnahme der Kranzanordnung (20) aus der Sammelaufnahme (80) mittels eines Greifelements (65, 67);
Einbringen der Kranzanordnung (20) in das Maschinenelement (37),
**dadurch gekennzeichnet, dass** die Kranzanordnung (20) durch Öffnen, Schließen und relativ zu der Sammelaufnahme (80) axiales Verschieben von mindestens zwei unabhängig voneinander bewegbaren Greifelementen (65, 67) aus der Sammelaufnahme (80) entnommen wird.

9. Verfahren nach Anspruch 8, **dadurch gekennzeichnet, dass** in der Sammelaufnahme (80) mehrere Kränze zusammengeführt werden, um die Kranzanordnung (20) bereitzustellen, und die Kränze gemeinsam aus der Sammelaufnahme (80) entnommen und gemeinsam in das Maschinenelement (37) eingebracht werden.

10. Verfahren nach einem der Ansprüche 8 oder 9, **dadurch gekennzeichnet, dass**
10.1 zum Greifen der Kranzanordnung (20) die axial bewegbaren Greifelemente (65, 67) mit relativ zueinander axial bewegbaren Halteelementen (75, 77) zusammenwirken, und/ oder
10.2 zum Greifen der Kranzanordnung (20) mindestens eines der Greifelemente (67) oder ein drittes Greifelement mit einem axial bewegbaren Gegenhalter (82) der Sammelaufnahme (80) zusammenwirkt, und/oder
10.3 zur Entnahme der Kranzanordnung (20) ein Greifelement (67) die Kranzanordnung (20) zunächst an einer ersten axialen Position greift und durch axiale Bewegung teilweise aus der Sammelaufnahme (80) herausbewegt, und anschließend ein anderes Greifelement (65) die Kranzanordnung (20) an einer zweiten axialen Position greift, um durch axiale Bewegung die Kranzanordnung (20) vollständig aus der Sammelaufnahme (80) heraus zu bewegen, und/oder
10.4 zum Einbringen der Kranzanordnung (20) in das Maschinenelement (37) ein erstes Greifelement (65) axial in Richtung des Maschinenelements (37) bewegt wird, während ein zweites Greifelement (67) an seiner axialen Position verbleibt, und/ oder
10.5 zum Einbringen der Kranzanordnung (20) in das Maschinenelement (37) ein Andruckelement (45) axial in Richtung des Maschinenelements (37) bewegt wird, und/oder
10.6 zum Einbringen der Kranzanordnung (20) in das Maschinenelement (37) ein Andruckelement (45) an den geöffneten Greifelementen (65, 67) vorbeigeführt wird, um die Drahtstücke (2) vollständig in das Maschinenelement (37) zu fügen, und/oder
10.7 die Kränze (20a) einzeln aus einem oder mehreren Vorstecknestern entnommen und nacheinander der Sammelaufnahme (80) zugeführt werden, bevor sie gemeinsam aus der Sammelaufnahme (80) entnommen und in das Maschinenelement (37) eingebracht werden, und/oder
10.8 dass die Schritte gemäß 11.7 mit derselben Fügeeinrichtung durchgeführt werden wie die Entnahme der Kranzanordnung (20) aus der Sammelaufnahme (80) und das Einbringen der Kranzanordnung (20) in ein Maschinenelement (37).

11. Verfahren nach einem der Ansprüche 8 bis 10, **gekennzeichnet durch** einen oder mehrere der folgenden Schritte:
11.1 Positionieren und Schließen eines unteren Greifelements (67) unterhalb der Sammelaufnahme (80);
11.2 Axiales Verfahren des unteren Greifelements (67) nach unten zum axialen Richten der Drahtstücke (2);
11.3 Weiteres Schließen des unteren Greifelements (67) zum kraftschlüssigen Greifen der Drahtstücke (2);
11.4 Axiales Verfahren des unteren Greifelements (67) nach oben und Mitnehmen der Drahtstücke (2);
11.5 Schließen eines oberen Greifelements (65) zum Greifen der Drahtstücke (2) oberhalb der Sammelaufnahme (80);
11.6 Öffnen des unteren Greifelements (67) und Verfahren auf eine Position zwischen der Sammelaufnahme (80) und dem oberen Greifelement (65);
11.7 Schließen des unteren Greifelements (67);
11.8 Axiales Verfahren des oberen Greifelements (65) nach oben und Mitnehmen der Drahtstücke (2) aus der Sammelaufnahme (80);
11.9 Positionieren der Fügeeinrichtung (90) über dem Maschinenelement (37);
11.10 Axiales Verfahren des oberen Greifelements (65) nach unten zum teilweisen Einführen der Drahtstücke (2) in das Maschinenelement (37);
11.11 Axiales Verfahren eines Andruckelements (45) nach unten gemeinsam mit dem oberen Greifelement (65);
11.12 Öffnen des oberen und des unteren Greifelements (65, 67) und weiteres axiales Verfahren des Andruckelements (45) nach unten, zum vollständigen Einfügen der Drahtstücke (2) in das Maschinenelement (37).

12. Verwendung einer Vorrichtung nach einem der Ansprüche 1 bis 7 zur Durchführung eines Verfahrens nach einem der Ansprüche 8 bis 11.

## Claims

1. Device for joining electrical conductors in a machine element of an electric machine, comprising:
a collection receptacle (80) for providing a ring assembly (20) consisting of one or more rings that are formed of electrically conductive wire pieces (2);
a joining device (90) for removal of the ring assembly (20) from the collection receptacle (80) and for insertion of the ring assembly (20) into the machine element (37), wherein the joining device (90) comprises a gripping element (65, 67) for engaging the ring assembly (20) on its outer side, **characterized in that** the joining device (90) comprises a first gripping element (65) and a second gripping element (67) for engaging the ring assembly (20) on its outer side, wherein the gripping elements (65, 67) are movable independently of one another in the axial direction relative to the collection receptacle (80).

2. Device according to claim 1, **characterized in that**
2.1 the gripping elements (65, 67) are of annular design and/or
2.2 the gripping elements (65, 67) are arranged vertically one on top of the other and are designed as an upper gripping element (65) or lower gripping element (67) and/or
2.3 the gripping elements (65, 67) are designed as gripping rings with radially movable finger elements (69) for opening and closing.

3. Device according to any one of the preceding claims, **characterized in that** the joining device (90)
3.1 comprises an axially movable counterholder (70) for positioning on the inner side of the ring assembly (20) and/or
3.2 is also designed for removing the individual rings from a pre-pinning nest and for inserting the individual rings into the collection receptacle (80).

4. Device according to any one of the preceding claims, **characterized in that** the joining device (90) comprises a first retaining element (75) and a second retaining element (77), wherein
4.1 the retaining elements (75, 77) are movable independently of one another in the axial direction and/or
4.2 the retaining elements (75, 77) are each designed as an annular piston and/or
4.3 the retaining elements (75, 77) are arranged vertically one on top of the other and function as a counterholder for an upper gripping element (65) and a lower gripping element (67) and/or
4.4 the retaining elements (75, 77) have a groove (75a, 77a) for receiving parts of a gripping element (65, 67) and/or
4.5 one of the retaining elements (77) is fixed to a frame (50) which holds the joining device (90) and/or
4.6 at least one of the retaining elements (75) is axially moved by a gripping element (65) through a positive connection with this.

5. Device according to any one of the preceding claims, **characterized in that** the collection receptacle (80) includes a nest region (81) for receiving the wire pieces (2) and a counterholder (82) for positioning the wire pieces (2) on its outer side.

6. Device according to claim 5, **characterized in that** the counterholder (82)
6.1 is designed as an annular piston and/or
is axially movable relative to the nest region (81) and/or
6.2 includes a groove (82a) for receiving parts of a gripping element (65, 67) and/or
6.3 is carried along in the axial direction by the gripping element (65, 67) when a closed gripping element is moved and/or
6.4 is pre-loaded relative to the nest region (81) and/or
6.5 is arranged below the nest region (81).

7. Device according to any one of the preceding claims, **characterized in that** the joining device (90) comprises a pressure element (45) for pressing the wire pieces (2) into the machine element (37), wherein the pressure element (45)
7.1 is axially movable and/or
7.2 is designed in a bell shape.

8. Method for joining electrical conductors in a machine element of an electric machine, comprising the steps of:
providing a ring assembly (20) consisting of one or more rings formed from joined,
electrically conductive wire pieces (2) in a collection receptacle (80);
removing the ring assembly (20) from the collection receptacle (80) using a gripping element (65, 67);
inserting the ring assembly (20) into the machine element (37),
**characterized in that** the ring assembly (20) is removed from the collection receptacle (80) by opening, closing and axially displacing at least two independently movable gripping elements (65, 67) relative to the collection receptacle (80).

9. Method according to claim 8, **characterized in that**, multiple rings are assembled in the collection receptacle (80) to form the ring assembly (20), and the rings are removed together from the collection receptacle (80) and inserted together into the machine component (37).

10. Method according to any one of claims 8 or 9, **characterized in that**
10.1 for gripping the ring assembly (20), the axially movable gripping elements (65, 67) cooperate with retaining elements (75, 77) axially movable relative to one another and/or
10.2 for gripping the ring assembly (20), at least one of the gripping elements (67) or a third gripping element cooperates with an axially movable counterholder (82) of the collection receptacle (80) and/or
10.3 for the removal of the ring assembly (20), a gripping element (67) initially grips the ring assembly (20) at a first axial position and partially moves it out of the collection receptacle (80) by means of axial movement and thereafter another gripping element (65) grips the ring assembly (20) at a second axial position to move the ring assembly (20) completely out of the collection receptacle (80) by means of axial movement and/or
10.4 for inserting the ring assembly (20) into the machine element (37), a first gripping element (65) is axially moved in the direction of the machine element (37) while a second gripping element (67) remains at its axial position and/or
10.5 for inserting the ring assembly (20) into the machine element (37), a pressure element (45) is axially moved in the direction of the machine element (37) and/or
10.6 for inserting the ring assembly (20) into the machine element (37), a pressure element (45) is moved past the opened gripping elements (65, 67) to completely insert the wire pieces (2) into the machine element (37) and/or
10.7 the rings (20a) are removed individually and one after the other from one or more pre-pinning nests and are supplied one after the other to collection receptacle (80) before they are removed from the collection receptacle (80) together and inserted into the machine element (37) and/or
10.8 the steps according to 11.7 are performed using the same joining device as in the removal of the ring assembly (20) from the collection receptacle (80) and insertion of the ring assembly (20) into a machine element (37).

11. Method according to any one of claims 8 to 10, **characterized by** one or more of the following steps:
11.1 positioning and closing a lower gripping element (67) below the collection receptacle (80);
11.2 moving the lower gripping element (67) axially downward for axially aligning the wire pieces;
11.3 further closing the lower gripping element (67) to grip the wire pieces (2) with a force-fit;
11.4 moving the lower gripping element (67) axially upward and carrying the wire pieces (2) along;
11.5 closing an upper gripping element (65) for gripping the wire pieces (2) above the collection receptacle (80);
11.6 opening the lower gripping element (67) and moving to a position between the collection receptacle (80) and the upper gripping element (65);
11.7 closing the lower gripping element (67);
11.8 moving the upper gripping element (65) axially upward and carrying the wire pieces (2) from the collection receptacle (80) along;
11.9 positioning the joining device (90) above the machine element (37);
11.10 moving the upper gripping element (65) axially downward to partially insert the wire pieces (2) into the machine element (37);
11.11 moving the pressure element (45) axially downward together with the upper gripping element (65);
11.12 opening the upper and the lower gripping elements (65, 67) and further moving the pressure element (45) axially downward to completely insert the wire pieces (2) into the machine element (37).

12. Use of a device according to any one of claims 1 to 7 for carrying out a method according to any one of claims 8 to 11.

## Revendications

1. Dispositif pour assembler des conducteurs électriques dans un élément de machine d'une machine électrique, comprenant:
un logement collecteur (80) destiné à recevoir un ensemble d'anneaux (20) constitué d'un ou plusieurs couronnes formées de morceaux de fil électriquement conducteurs (2);
un dispositif d'assemblage (90) destiné à retirer l'ensemble d'anneaux (20) du logement collecteur (80) et à insérer l'ensemble d'anneaux (20) dans l'élément de machine (37),
dans lequel le dispositif d'assemblage (90) comprend un élément de préhension (65, 67) destiné à venir en prise avec l'ensemble d'anneaux (20) sur son côté extérieur,
**caractérisé en ce que** le dispositif d'assemblage (90) comprend un premier élément de préhension (65) et un deuxième élément de préhension (67) destinés à venir en prise avec l'ensemble d'anneaux (20) sur son côté extérieur, les éléments de préhension (65, 67) étant mobiles indépendamment l'un de l'autre dans la direction axiale par rapport au logement collecteur (80).

2. Dispositif selon la revendication 1, **caractérisé en ce que**
2.1 les éléments de préhension (65, 67) sont de forme annulaire et/ou
2.2 les éléments de préhension (65, 67) sont disposés verticalement l'un au-dessus de l'autre et sont conçus comme un élément de préhension supérieur (65) ou un élément de préhension inférieur (67) et/ou
2.3 les éléments de préhension (65, 67) sont conçus comme des anneaux de préhension avec des éléments en forme de doigts (69) mobiles radialement pour l'ouverture et la fermeture.

3. Dispositif selon l'une quelconque des revendications précédentes, **caractérisé en ce que** le dispositif d'assemblage (90)
3.1 comprend un contre-support (70) mobile axialement destiné à être positionné sur la face intérieure de l'ensemble d'anneaux (20) et/ou
3.2 est également conçu pour retirer les anneaux individuels d'un logement de positionnement et pour insérer les anneaux individuels dans le logement collecteur (80).

4. Dispositif selon l'une quelconque des revendications précédentes, **caractérisé en ce que** le dispositif d'assemblage (90) comprend un premier élément de retenue (75) et un deuxième élément de retenue (77), dans lequel
4.1 les éléments de retenue (75, 77) sont mobiles indépendamment l'un de l'autre dans la direction axiale et/ou
4.2 les éléments de retenue (75, 77) sont chacun conçus comme un piston annulaire et/ou
4.3 les éléments de retenue (75, 77) sont disposés verticalement l'un au-dessus de l'autre et fonctionnent comme un contre-support pour un élément de préhension supérieur (65) et un élément de préhension inférieur (67) et/ou
4.4 les éléments de retenue (75, 77) comportent une rainure (75a, 77a) destinée à recevoir des parties d'un élément de préhension (65, 67) et/ou
4.5 l'un des éléments de retenue (77) est fixé à un châssis (50) qui supporte le dispositif d'assemblage (90) et/ou
4.6 au moins l'un des éléments de retenue (75) est déplacé axialement par un élément de préhension (65) grâce à une liaison par complémentarité de forme avec celui-ci.

5. Dispositif selon l'une quelconque des revendications précédentes, **caractérisé en ce que** le logement collecteur (80) comprend une zone de logement (81) destinée à recevoir les morceaux de fil (2) et un contre-support (82) destiné à positionner les morceaux de fil (2) sur sa face extérieure.

6. Dispositif selon la revendication 5, **caractérisé en ce que** le contre-support (82)
6.1 est conçu comme un piston annulaire et/ou
est mobile axialement par rapport à la zone de logement (81) et/ou
6.2 comporte une rainure (82a) destinée à recevoir des parties d'un élément de préhension (65, 67) et/ou
6.3 est entraîné dans la direction axiale par l'élément de préhension (65, 67) lorsqu'un élément de préhension fermé est déplacé et/ou
6.4 est précontraint par rapport à la zone de logement (81) et/ou
6.5 est disposé en dessous de la zone de logement (81).

7. Dispositif selon l'une quelconque des revendications précédentes, **caractérisé en ce que** le dispositif d'assemblage (90) comprend un élément de pression (45) destiné à presser les morceaux de fil (2) dans l'élément de machine (37), dans lequel l'élément de pression (45)
7.1 est mobile axialement et/ou
7.2 est conçu en forme de cloche.

8. Procédé d'assemblage de conducteurs électriques dans un élément de machine d'une machine électrique, comprenant les étapes consistant à:
fournir un ensemble d'anneaux (20) constitué d'un ou plusieurs anneaux formés à partir de morceaux de fil (2) assemblés et électriquement conducteurs dans un logement collecteur (80);
retirer l'ensemble d'anneaux (20) du logement collecteur (80) à l'aide d'un élément de préhension (65, 67);
insérer l'ensemble d'anneaux (20) dans l'élément de machine (37),
**caractérisé en ce que** l'ensemble d'anneaux (20) est retiré du logement collecteur (80) en ouvrant, fermant et déplaçant axialement au moins deux éléments de préhension (65, 67) mobiles indépendamment l'un de l'autre par rapport au logement collecteur (80).

9. Procédé selon la revendication 8, **caractérisé en ce que** plusieurs anneaux sont assemblés dans le logement collecteur (80) pour former l'ensemble d'anneaux (20) et les anneaux sont retirés ensemble du logement collecteur (80) et insérés ensemble dans l'élément de machine (37).

10. Procédé selon l'une quelconque des revendications 8 ou 9, **caractérisé en ce que**
10.1 pour saisir l'ensemble d'anneaux (20), les éléments de préhension mobiles axialement (65, 67) coopèrent avec des éléments de retenue (75, 77) mobiles axialement l'un par rapport à l'autre et/ou
10.2 pour saisir l'ensemble d'anneaux (20), au moins l'un des éléments de préhension (67) ou un troisième élément de préhension coopère avec un contre-support (82) mobile axialement du logement collecteur (80) et/ou
10.3 pour le retrait de l'ensemble d'anneaux (20), un élément de préhension (67) saisit initialement l'ensemble d'anneaux (20) dans une première position axiale et le déplace partiellement hors du logement collecteur (80) au moyen d'un mouvement axial, puis un autre élément de préhension (65) saisit l'ensemble d'anneaux (20) dans une deuxième position axiale pour déplacer l'ensemble d'anneaux (20) complètement hors du logement collecteur (80) au moyen d'un mouvement axial et/ou
10.4 pour insérer l'ensemble d'anneaux (20) dans l'élément de machine (37), un premier élément de préhension (65) est déplacé axialement en direction de l'élément de machine (37) tandis qu'un deuxième élément de préhension (67) reste à sa position axiale et/ou
10.5 pour insérer l'ensemble d'anneaux (20) dans l'élément de machine (37), un élément de pression (45) est déplacé axialement en direction de l'élément de machine (37) et/ou
10.6 pour insérer l'ensemble d'anneaux (20) dans l'élément de machine (37), un élément de pression (45) passe devant des éléments de préhension ouverts (65, 67) afin d'insérer complètement les morceaux de fil (2) dans l'élément de machine (37) et/ou
10.7 les anneaux (20a) sont retirés individuellement et l'un après l'autre d'un ou plusieurs logements de positionnement et sont acheminés l'un après l'autre vers le logement collecteur (80) avant d'être retirés ensemble du logement collecteur (80) et insérés dans l'élément de machine (37) et/ou
10.8 les étapes selon 11.7 sont réalisées à l'aide du même dispositif d'assemblage que celui utilisé pour le retrait de l'ensemble d'anneaux (20) du logement collecteur (80) et l'insertion de l'ensemble d'anneaux (20) dans un élément de machine (37).

11. Procédé selon l'une quelconque des revendications 8 à 10, **caractérisé par** une ou plusieurs des étapes suivantes:
11.1 positionnement et fermeture d'un élément de préhension inférieur (67) sous le logement collecteur (80);
11.2 déplacer l'élément de préhension inférieur (67) axialement vers le bas pour aligner axialement les morceaux de fil;
11.3 fermer davantage l'élément de préhension inférieur (67) pour saisir les morceaux de fil (2) par ajustement serré;
11.4 déplacer l'élément de préhension inférieur (67) axialement vers le haut et entraîner les morceaux de fil (2) avec lui;
11.5 fermer un élément de préhension supérieur (65) pour saisir les morceaux de fil (2) au-dessus du logement collecteur (80);
11.6 ouvrir l'élément de préhension inférieur (67) et le déplacer vers une position située entre le logement collecteur (80) et l'élément de préhension supérieur (65);
11.7 fermer l'élément de préhension inférieur (67);
11.8 déplacer l'élément de préhension supérieur (65) axialement vers le haut et entraîner les morceaux de fil (2) depuis le logement collecteur (80);
11.9 positionner le dispositif d'assemblage (90) au-dessus de l'élément de machine (37);
11.10 déplacer l'élément de préhension supérieur (65) axialement vers le bas pour insérer partiellement les morceaux de fil (2) dans l'élément de machine (37);
11.11 déplacer l'élément de pression (45) axialement vers le bas en même temps que l'élément de préhension supérieur (65);
11.12 ouvrir les éléments de préhension supérieur et inférieur (65, 67) et déplacer davantage l'élément de pression (45) axialement vers le bas pour insérer complètement les morceaux de fil (2) dans l'élément de machine (37).

12. Utilisation d'un dispositif selon l'une quelconque des revendications 1 à 7 pour mettre en œuvre un procédé selon l'une quelconque des revendications 8 à 11.
